# EUROPEAN PATENT SPECIFICATION

(11) **EP 4 711 265 B1**
(45) Date of publication and mention of the grant of the patent: **11.11.2026**
(21) Application number: 25200556.6
(22) Date of filing: 05.09.2025
(51) Int. Cl.: B63H 20/14, B63H 20/20, F16D 3/14

(54) **BOAT PROPULSION DEVICE AND BOAT**
BOOTSANTRIEBSVORRICHTUNG UND BOOT
DISPOSITIF DE PROPULSION DE BATEAU ET BATEAU

(30) Priority: 11.09.2024 JP 2024157192
(43) Date of publication of application: 18.03.2026
(73) Proprietor: Yamaha Hatsudoki Kabushiki Kaisha, Iwata-shi, Shizuoka 438-8501 (JP)
(72) Inventor: Taniguchi, Takafumi, Iwata-shi, Shizuoka, 4388501 (JP)
(74) Representative: Grünecker Patent- und Rechtsanwälte PartG mbB

(56) References cited:
- JP-B2- 4 499 876
- US-A1- 2022 306 258

## Description

The present invention relates to a boat propulsion device and a boat.

A known boat propulsion device includes an engine, an output shaft, an input pinion that rotates by the driving force of the engine, a forward gear and a reverse gear that mesh with the input pinion, and an actuator. The actuator reduces rattling noise by braking the forward gear or backward gear. The actuator is driven electrically, hydraulically, or pneumatically (see, e.g., JP 4499876 B). US 2022/306258 A1 constitutes further relevant prior art.

It is the object of the present invention to provide boat propulsion device and a boat wherein rattling noise of the boat propulsion device can be reduced.

According to the present invention said object is solved by boat propulsion device having the features of the independent claim 1 or a boat according to claim 15.

Preferred embodiments are laid down in the dependent claims.
(1) Accordingly, the boat propulsion device disclosed in this specification includes an engine, a propeller shaft, a transmission device, a rotating member, a non-rotating member, an elastic member, a housing, a housed member, and a pusher. The transmission device transmits the propulsion force of the engine to the propeller shaft. The transmission device includes a drive gear that rotates by the driving force of the engine and a driven gear that meshes with the drive gear. The rotating member is arranged around the propeller shaft. The rotating member is movable in the axial direction of the propeller shaft and rotates around the propeller shaft along with the rotation of the propeller shaft. The non-rotating member is arranged around the propeller shaft and is adjacent to the rotating member in the axial direction. The non-rotating member is movable in the axial direction and the rotation of the non-rotating member around the propeller shaft is restricted. The elastic member pushes at least one of the rotating member and the non-rotating member to one side in the axial direction and exerts a force to cause the rotating member and the non-rotating member to come into contact with each other. The housing surrounds the outer circumference of the propeller shaft. The housing has a first surface facing the other side in the axial direction and inclined so that it approaches the other side in the axial direction of the propeller shaft from the center side toward the outer side in the radial direction of the propeller shaft. The housing rotates around the propeller shaft along with the rotation of the propeller shaft. The housed member contacts the first surface and is movable in the radial direction. The pusher is movable in the axial direction. The pusher includes a first part that contacts the end of the other side of the housed member in the axial direction, and a second part that contacts the end of the one side in the axial direction of one of the rotating member and the non-rotating member located on the other side in the axial direction.

This boat propulsion device can reduce rattling noise by applying friction to the propeller shaft through the action of an elastic member and can reduce the friction applied to the propeller shaft as the rotation speed of the propeller shaft increases.

(2) Another boat propulsion device disclosed in this specification includes an engine, a shaft, a transmission device, a rotating member, a non-rotating member, an elastic member, a housing, a housed member, and a pusher. The transmission device transmits the driving force of the engine to the shaft. The transmission device includes a drive gear that rotates by the driving force of the engine and a driven gear that meshes with the drive gear. The rotating member is arranged around the shaft. The rotating member is movable in the axial direction of the shaft and rotates around the shaft along with the rotation of the shaft. The non-rotating member is arranged around the shaft and is adjacent to the rotating member in the axial direction. The non-rotating member is movable in the axial direction and the rotation of the non-rotating member around the shaft is restricted. The elastic member pushes at least one of the rotating member and the non-rotating member to one side in the axial direction and exerts a force to cause the rotating member and the non-rotating member to come into contact with each other. The housing surrounds the outer circumference of the shaft. The housing has a first surface facing the other side in the axial direction and inclined so that it approaches the other side in the axial direction of the shaft from the center side toward the outer side in the radial direction of the shaft. The housing rotates around the shaft along with the rotation of the shaft. The housed member contacts the first surface and is movable in the radial direction. The pusher is movable in the axial direction. The pusher includes a first part that contacts the end of the other side of the housed member in the axial direction, and a second part that contacts the end of the one side in the axial direction of one of the rotating member and the non-rotating member located on the other side in the axial direction.

This boat propulsion device can reduce rattling noise by applying friction to the shaft through the action of the elastic member and can reduce the friction applied to the propeller shaft as the rotation speed of the shaft increases.

The technology disclosed in this document can be implemented in various forms, e.g., in the form of an outboard motor or a boat equipped with an outboard motor and a boat body.

This boat propulsion device can reduce rattling noise by applying friction to the shaft through the action of the elastic member and can reduce the friction applied to the propeller shaft as the rotation speed of the shaft increases.

### BRIEF DESCRIPTION OF THE DRAWINGS

FIG. 1 is a perspective view schematically illustrating a configuration of a boat.
FIG. 2 is a side view schematically illustrating a configuration of an outboard motor.
FIG. 3 is an explanatory view illustrating a detailed configuration of the area around the propeller shaft.
FIG. 4 is a cross-sectional view of the outboard motor taken along line IV-IV in FIG. 3.
FIG. 5 is an explanatory view illustrating a detailed configuration of the area around the propeller shaft in the status where the rotation speed of the engine body is relatively low.
FIG. 6 is an explanatory view illustrating a detailed configuration of the area around the propeller shaft in the status where the rotation speed of the engine body is relatively high.
FIG. 7 is an explanatory view conceptually illustrating the force applied to the roller.

### DETAILED DESCRIPTION OF THE PREFERRED EMBODIMENTS

### A. EMBODIMENT:

### CONFIGURATION OF THE BOAT 10

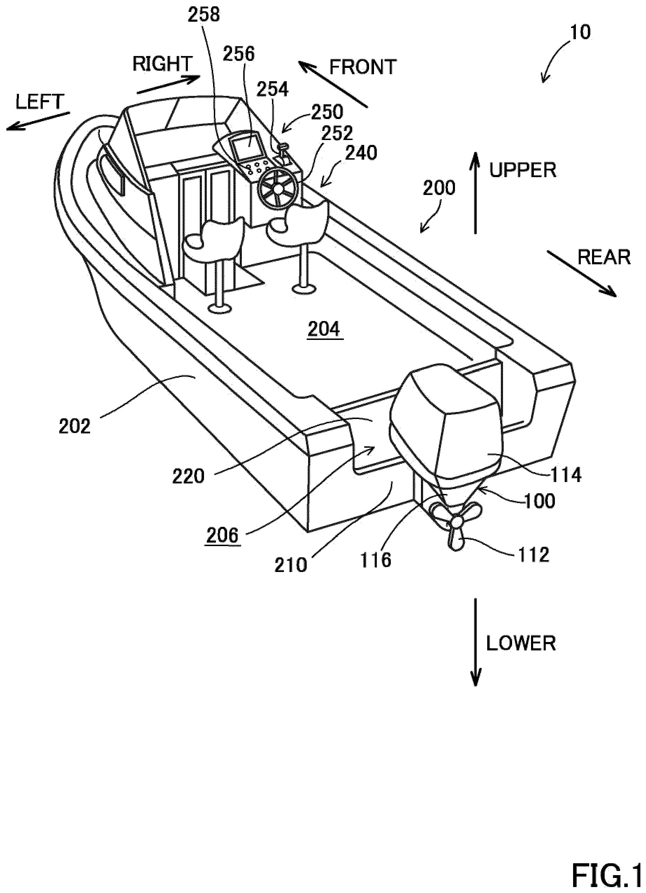

FIG. 1 is a perspective view schematically illustrating a configuration of a boat 10. FIG. 1 and other drawings described below show arrows representing each direction with respect to the position of the boat 10. More specifically, each drawing shows arrows representing the front direction (FRONT), rear direction (REAR), left direction (LEFT), right direction (RIGHT), upper direction (UPPER), and lower direction (LOWER), respectively. The front-rear direction, left-right direction, and upper-lower (vertical) direction are orthogonal to each other. It should be noted that, in this specification, axes, members, and the like, extending in the front-rear direction need not necessarily be parallel to the front-rear direction. Axes and members extending in the front-rear direction include axes and members that are inclined in the range of ±45° to the front-rear direction. Similarly, axes and members extending in the upper-lower direction include axes and members inclined within a range of ±45° to the upper-lower direction, and axes and members extending in the left-right direction include axes and members inclined within a range of ±45° to the left-right direction.

The boat 10 includes a boat body 200 and an outboard motor 100. In this embodiment, the boat 10 has only one outboard motor 100, but the boat 10 may have multiple outboard motors 100.

### CONFIGURATION OF BOAT BODY 200

The boat body 200 is a part of the boat 10 for occupants to ride. The boat body 200 includes a boat main body 202, a pilot seat 240, and a steering device 250. The boat main body 202 is provided with a living space 204. The pilot seat 240 is installed in the living space 204. The steering device 250 is installed near the pilot seat 240. The steering device 250 is a device for steering the boat. The steering device 250 includes, e.g., a steering wheel 252, a shift/throttle lever 254, a monitor 256, and an input device 258. The boat body 200 also includes a partition wall 220 and a transom 210. The partition wall 220 partitions the rear end of the living space 204. The transom 210 is located at the rear end of the boat body 200. In the front-rear direction, there is a space 206 between the transom 210 and the partition wall 220.

### CONFIGURATION OF OUTBOARD MOTOR 100

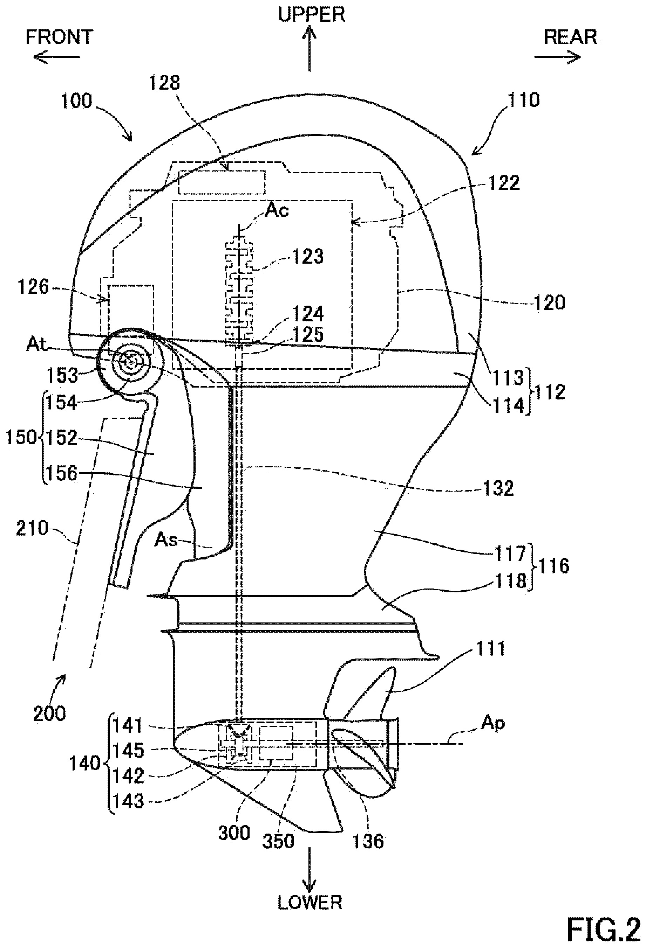

FIG. 2 is a side view schematically illustrating a configuration of an outboard motor 100. The outboard motor 100 in the reference attitude will be described below unless otherwise specified. The reference attitude is an attitude in which the rotation axis Ac of the crankshaft 123, which will be described later, extends in the upper-lower direction and the rotation axis Ap of the propeller shaft 136, which will be described later, extends in the front-rear direction. The front-rear direction, the left-right direction, and the upper-lower direction are respectively defined based on the outboard motor 100 in the reference attitude. The outboard motor 100 is an example of the boat propulsion device.

The outboard motor 100 is a device that generates thrust to propel the boat 10. The outboard motor 100 is attached to the transom 210 at the rear portion of the boat body 200. The outboard motor 100 includes an outboard motor main body 110 and a suspension device 150.

### CONFIGURATION OF OUTBOARD MOTOR MAIN BODY 110

The outboard motor main body 110 includes an engine assembly 120, a cowl 112, a casing 116, a drive shaft 132, a propeller shaft 136, a propeller 111, a transmission device 140, a silencer 300, and a housing 350.

The engine assembly 120 is an assembly of multiple parts, including an engine body (engine) 122. The engine assembly 120 includes, in addition to the engine body 122, intake system components 126 (e.g., throttle bodies, superchargers, and the like) and electrical components 128 (e.g., fuse boxes, ECUs, steering CUs, and the like). The engine assembly 120 is located relatively upper position in the outboard motor 100.

The engine body 122 is a prime mover that generates power. The engine body 122 is, e.g., an internal combustion engine. The engine body 122 includes a crankshaft 123 that converts the reciprocating motion of a piston, which is not shown in the figure, into rotational motion. The crankshaft 123 is arranged in an attitude in which its rotation axis Ac extends in an upper-lower direction. The crankshaft 123 includes a journal 124 and a spline 125. The journal 124 supports the crankshaft 123 itself in the bearing portion of the crankcase, which is not shown in the figure. The spline 125 is a portion with multiple vertical grooves formed for connecting with the drive shaft 132.

The cowl 112 is a housing body arranged in the upper portion of the outboard motor main body 110. The cowl 112 includes an upper cowl 113 and a lower cowl 114. The upper cowl 113 constitutes the upper portion of the cowl 112. The lower cowl 114 constitutes the lower portion of the cowl 112. The upper cowl 113 is removably attached to the lower cowl 114. The cowl 112 accommodates at least a portion of the engine assembly 120.

The casing 116 is a housing disposed in the lower portion of the outboard motor main body 110. The casing 116 is located below the cowl 112. The casing 116 includes an upper case 117 and a lower case 118. The upper case 117 constitutes the upper portion of the casing 116. The lower case 118 constitutes the lower portion of the casing 116.

The drive shaft 132 is a rod-shaped member that extends in the upper-lower direction. The upper end portion of the drive shaft 132 is connected to the spline 125 of the engine body 122. The drive shaft 132 extends downward from the connecting portion with the spline 125. The drive shaft 132 rotates together with the crankshaft 123 by the driving force of the engine body 122. At least a part of the drive shaft 132 is accommodated in the casing 116.

The propeller shaft 136 is a rod-shaped member. The propeller shaft 136 is arranged in an attitude in which its rotation axis Ap extends in the front-rear direction at a relatively lower part of the outboard motor main body 110. In other words, the axial direction of the propeller shaft 136 coincides with the front-rear direction of the outboard motor 100. The end of one side in the axial direction of the propeller shaft 136 is located on the rear side of the outboard motor 100, and the end of the other side in the axial direction of the propeller shaft 136 is located on the front side of the outboard motor 100. The front end portion of the propeller shaft 136 is accommodated in the lower case 118. The rear end portion of the propeller shaft 136 protrudes rearward from the lower case 118. The propeller shaft 136 is an example of the shaft.

The propeller 111 is a rotating member having multiple blades. The propeller 111 is attached to the rear end portion of the propeller shaft 136. The propeller 111 rotates together with the propeller shaft 136. The propeller 111 generates thrust for the boat 10 by rotating.

The transmission device 140 is a device that transmits the driving force of the engine body 122 to the propeller shaft 136. The transmission device 140 includes a first gear 141, a second gear 142, a third gear 143, and a dog clutch 145. The first gear 141 is an example of the drive gear. The second gear 142 and the third gear 143 are examples of the driven gears.

The first gear 141 is connected to the lower end portion of the drive shaft 132. The first gear 141 rotates together with the drive shaft 132 by the driving force of the engine body 122. The rotation axis of the first gear 141 is parallel to the rotation axis Ac of the crankshaft 123. In other words, the rotation axis of the first gear 141 is parallel to the upper-lower direction.

The second gear 142 and the third gear 143 are tubular gears that surround the front end portion of the propeller shaft 136. The rotation axes of the second gear 142 and the third gear 143 are parallel to the rotation axis Ap of the propeller shaft 136. In other words, the rotation axes of the second gear 142 and the third gear 143 are parallel to the horizontal direction and perpendicular to the rotation axis of the first gear 141. The second gear 142 and the third gear 143 are each meshed with the first gear 141. This allows the driving force of the engine body 122 to be transmitted to the second gear 142 and the third gear 143 via the first gear 141.

The dog clutch 145 is arranged between the second gear 142 and the third gear 143 in the front-rear direction. The dog clutch 145 is tubular and surrounds the front end portion of the propeller shaft 136. The dog clutch 145 is connected to the propeller shaft 136, e.g., by a spline. The dog clutch 145 rotates together with the propeller shaft 136.

The dog clutch 145 is movable in the front-rear direction. More specifically, the dog clutch 145 is movable between a first connected position connecting with the second gear 142, a second connected position connecting with the third gear 143, and a disconnected position away from the second gear 142 and the third gear 143. When the dog clutch 145 is in the first connected position, the rotation of the second gear 142 is transmitted to the dog clutch 145, and the rotation of the dog clutch 145 is transmitted to the propeller shaft 136. As a result, the propeller 111 rotates in the direction that moves the boat 10 forward. When the dog clutch 145 is in the second connected position, the rotation of the third gear 143 is transmitted to the dog clutch 145, and the rotation of the dog clutch 145 is transmitted to the propeller shaft 136. As a result, the propeller 111 rotates in the direction that moves the boat 10 backward. When the dog clutch 145 is in the disconnected position, the rotation of the first gear 141 and second gear 142 is not transmitted to the dog clutch 145. As a result, the propeller 111 does not receive the driving force of the engine body 122. In other words, when the dog clutch 145 is in the disconnected position, the outboard motor 100 is in a neutral state.

The silencer 300 and the housing 350 are located relatively lower position in the outboard motor 100. The silencer 300 and the housing 350 are housed in the lower case 118. Details of the silencer 300 and the housing 350 are described later.

### CONFIGURATION OF SUSPENSION DEVICE 150

The suspension device 150 is a device to suspend the outboard motor main body 110 to the boat body 200. The suspension device 150 includes a pair of left and right clamp brackets 152, a tilt shaft 154, and a swivel bracket 156.

The pair of left and right clamp brackets 152 are disposed behind the boat body 200 in a state separated from each other in the left-right direction and are fixed to the transom 210 of the boat body 200 by using, e.g., bolts. Each clamp bracket 152 has a tubular supporting portion 153 provided with a through-hole extending in the left-right direction.

The tilt shaft 154 is a rod-shaped member and is rotatably supported within the through-hole in the supporting portion 153 of the clamp bracket 152. The tilt axis At, which is the centerline of the tilt shaft 154, constitutes the horizontal (left-right) axis of the tilting action of the outboard motor 100.

The swivel bracket 156 is disposed so as to be sandwiched between the pair of clamp brackets 152 and is supported by the supporting portion 153 of the clamp brackets 152 via the tilt shaft 154 so as to be rotatable around the tilt axis At. The swivel bracket 156 is driven to rotate about the tilt axis At with respect to the clamp bracket 152 by a tilt device (not shown) that includes an actuator, such as a hydraulic cylinder, for example.

When the swivel bracket 156 rotates about the tilt axis At with respect to the clamp bracket 152, the outboard motor main body 110 supported by the swivel bracket 156 also rotates about the tilt axis At. This achieves the tilting action of rotating the outboard motor main body 110 in the upper-lower direction with respect to the boat body 200. By this tilting action, the outboard motor 100 can change the angle of the outboard motor main body 110 around the tilt axis At in the range from the tilt-down state in which the propeller 111 is disposed under the water (the state in which the outboard motor 100 is in the reference attitude) to the tilt-up state in which the propeller 111 is disposed above the water surface. Trimming action for adjusting the attitude of the boat 10 during travel can also be performed by adjusting the angle around the tilt axis At of the outboard motor main body 110.

### DETAILED CONFIGURATION AROUND PROPELLER SHAFT 136

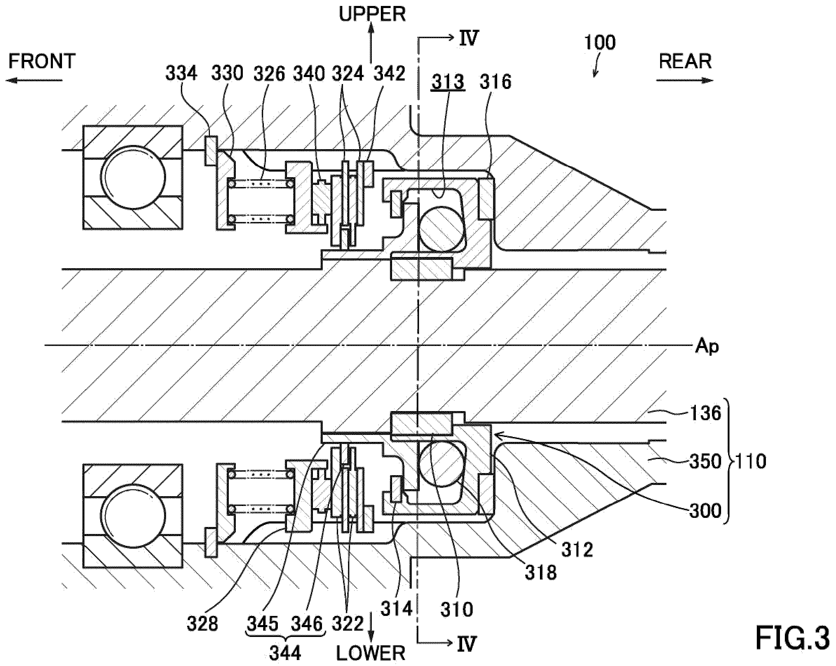

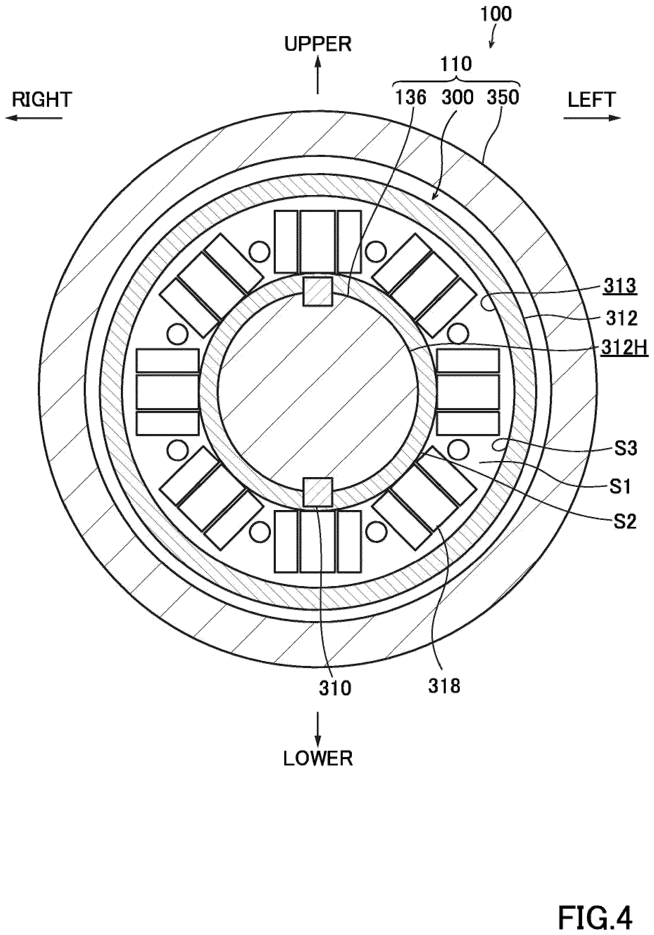

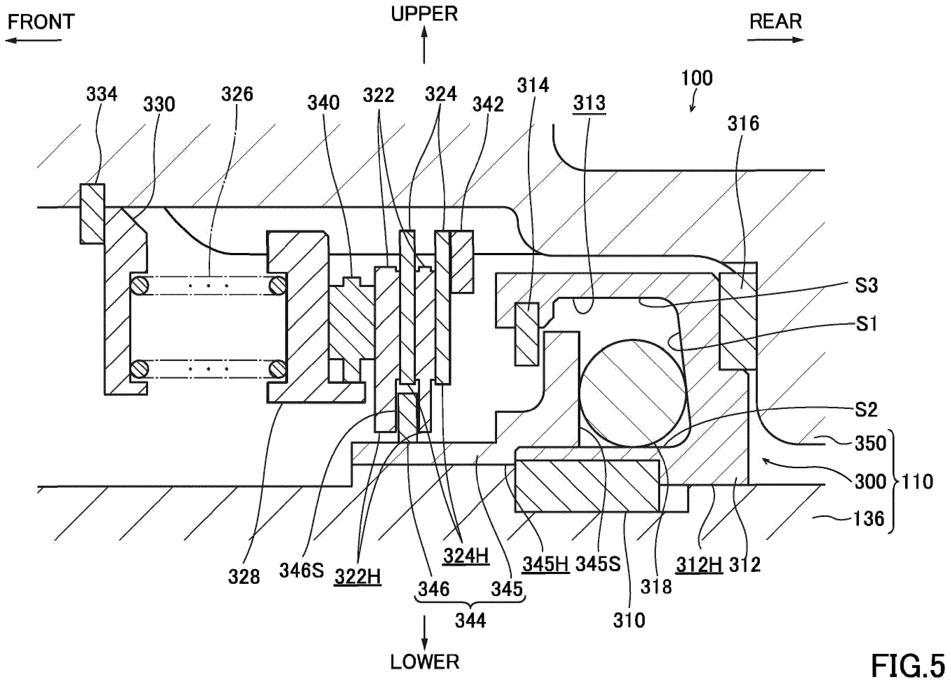

FIG. 3 is an explanatory view illustrating a detailed configuration of the area around the propeller shaft 136. FIG. 4 is a cross-sectional view of the outboard motor 100 taken along line IV-IV in FIG. 3. FIG. 5 is an explanatory view illustrating a detailed configuration of the area around the propeller shaft 136 in the status where the rotation speed of the engine body 122 is relatively low. FIGS. 3 and 5 show a cross-section of the outboard motor 100 perpendicular to the left-right direction. FIG. 4 shows a cross-section of the outboard motor 100 perpendicular to the front-rear direction.

The silencer 300 is an assembly of components arranged around the propeller shaft 136. As will be described later, the silencer 300 reduces the rattling noise that occurs between the first gear 141 and the second gear 142, and the rattling noise that occurs between the first gear 141 and the third gear 143, by applying friction to the propeller shaft 136. The housing 350 accommodates the silencer 300. In this embodiment, oil is stored inside the housing 350. The housing 350 is an example of the case.

The silencer 300 includes a key 310, a roller housing 312, a snap ring 314, a thrust bearing 316, a roller 318, a disk 322, a plate 324, a coil spring 326, a pressure plate 328, a spring seat 330, a snap ring 334, a thrust bearing 340, a snap ring 342, and a pusher 344.

The key 310 is a prismatic member that extends in the front-rear direction. The key 310 is connected to a portion of the surface of the propeller shaft 136 that faces outward in the radial direction of the propeller shaft 136. The key 310 rotates together with the propeller shaft 136. In this embodiment, the outboard motor 100 has two keys 310 arranged at positions that differ from each other in the rotating direction of the propeller shaft 136. The two keys 310 are arranged at equal intervals from each other in the rotating direction of the propeller shaft 136.

The roller housing 312 is a member having a hole 312H formed in the center. The propeller shaft 136 and the key 310 are arranged in the hole 312H of the roller housing 312. The roller housing 312 surrounds the outer circumference of the propeller shaft 136 in the radial direction of the propeller shaft 136. The roller housing 312 surrounds the outer circumference of the key 310 in the radial direction of the propeller shaft 136. A portion of the surface of the roller housing 312 facing the hole 312H is connected to the key 310. The roller housing 312 rotates around the propeller shaft 136 together with the key 310 along with the rotation of the propeller shaft 136.

The roller housing 312 has a housing space 313 that is open at the front side in the axial direction of the propeller shaft 136. The roller housing 312 has a first surface S1, a second surface S2, and a third surface S3, each of which faces the housing space 313. The first surface S1 faces the front side in the axial direction of the propeller shaft 136. The first surface S1 is inclined so that it approaches the front side in the axial direction of the propeller shaft 136 from the center side toward the outer side in the radial direction of the propeller shaft 136. The second surface S2 faces the outer side in the radial direction of the propeller shaft 136. The second surface S2 is the inner circumferential surface of the housing space 313. The third surface S3 faces the center side in the radial direction of the propeller shaft 136. The third surface S3 is the outer circumferential surface of the housing space 313. The roller housing 312 is an example of the housing.

The snap ring 314 is a ring-shaped member. The snap ring 314 is attached to the roller housing 312 so that it protrudes from the third surface S3 of the roller housing 312 toward the center side in the radial direction of the propeller shaft 136.

The thrust bearing 316 is arranged between the roller housing 312 and the housing 350 in the front-rear direction. The roller housing 312 is connected to the housing 350 via the thrust bearing 316. Since the roller housing 312 is in contact with the thrust bearing 316, friction is reduced when it rotates along with the rotation of the propeller shaft 136. The thrust bearing 316 is an example of the second thrust bearing.

The roller 318 is housed in the housing space 313 of the roller housing 312. The roller 318 is in contact with the first surface S1 of the roller housing 312. The roller 318 is capable of moving in the radial direction of the propeller shaft 136 by rolling in the radial direction of the propeller shaft 136. In this embodiment, the outboard motor 100 has eight rollers 318 arranged at positions that are different from each other in the rotating direction of the propeller shaft 136. The eight rollers 318 are arranged at equal intervals from each other in the rotating direction of the propeller shaft 136. The roller 318 is an example of the housed member.

The disk 322 is arranged around the propeller shaft 136. The disk 322 is located in front of the roller housing 312 and the rollers 318 in the axial direction of the propeller shaft 136. The disk 322 is a plate-shaped member with a hole 322H formed in the center. The propeller shaft 136 is arranged in the hole 322H of the disk 322. The disk 322 surrounds the outer circumference of the propeller shaft 136. The disk 322 is movable in the axial direction of the propeller shaft 136. The disk 322 rotates around the propeller shaft 136 along with the rotation of the propeller shaft 136. In this embodiment, the outboard motor 100 includes two disks 322 that are arranged in parallel with each other in the axial direction of the propeller shaft 136. The disk 322 is an example of the rotating member.

The plate 324 is arranged around the propeller shaft 136. The plate 324 is located in front of the roller housing 312 and the rollers 318 in the axial direction of the propeller shaft 136. The plate 324 is a plate-shaped member with a hole 324H formed in the center. The propeller shaft 136 is arranged in the hole 324H of the plate 324. The plate 324 surrounds the outer circumference of the propeller shaft 136. The size of the hole 324H in the plate 324 is larger than the size of the hole 322H in the disk 322. In other words, in the radial direction of the propeller shaft 136, the inner circumferential surface of the plate 324 is located outside the inner circumferential surface of the disk 322. The plate 324 is adjacent to the disk 322 in the axial direction of the propeller shaft 136. The plate 324 is movable in the axial direction of the propeller shaft 136. The plate 324 is restricted in its rotation around the propeller shaft 136. The plate 324 does not rotate around the propeller shaft 136. In this embodiment, the outboard motor 100 has two plates 324 that are arranged parallel to each other in the axial direction of the propeller shaft 136. In addition, each of the disks 322 and each of the plates 324 are arranged alternately in the axial direction of the propeller shaft 136. In this embodiment, they are arranged in the order of the front-side disk 322, the front-side plate 324, the rear-side disk 322, and the rear-side plate 324, from the front side to the rear side. The plate 324 is an example of the non-rotating member.

The coil spring 326 is arranged around the propeller shaft 136. The coil spring 326 is a compression coil spring that expands and contracts in the front-rear direction. More specifically, the coil spring 326 is a multi-row coil spring in which two coil springs are arranged in a radial direction. The coil spring 326 pushes the front side disk 322 toward the rear side in the axial direction of the propeller shaft 136 by the elastic force of the coil spring 326. In other words, the coil spring 326 exerts a force to cause the disk 322 and the plate 324, which are arranged in parallel in the axial direction of the propeller shaft 136, to come into contact with each other. The coil spring 326 is an example of the elastic member.

The pressure plate 328 is arranged around the propeller shaft 136. The pressure plate 328 is located between the coil spring 326 and the disk 322/the plate 324 in the axial direction of the propeller shaft 136. The pressure plate 328 is movable in the axial direction of the propeller shaft 136. The pressure plate 328 is in contact with the coil spring 326 and transmits the elastic force of the coil spring 326 to the disk 322 and the plate 324.

The spring seat 330 is arranged around the propeller shaft 136. The spring seat 330 is arranged in front of the coil spring 326. The snap ring 334 is a ring-shaped member. The snap ring 334 is attached to the housing 350 so that it protrudes from the inner surface of the housing 350 toward center side in the radial direction of the propeller shaft 136. The snap ring 334 is located in front of the spring seat 330. The spring seat 330 is in contact with the snap ring 334, which restrict the movement of the spring seat 330 in the axial direction of the propeller shaft 136. In addition, the front end of the coil spring 326 is in contact with the spring seat 330, which restrict the movement of the coil spring 326 in the axial direction of the propeller shaft 136.

The thrust bearing 340 is arranged around the propeller shaft 136. The thrust bearing 340 is located between the pressure plate 328 and the disk 322/the plate 324 in the axial direction of the propeller shaft 136. The thrust bearing 340 is in contact with the pressure plate 328 and transmits the elastic force of the coil spring 326, which is transmitted through the pressure plate 328, to the disk 322 and the plate 324. The front side disk 322 is connected to the pressure plate 328 via the thrust bearing 340. The front side disk 322 is in contact with the thrust bearing 340 to reduce the friction when rotating along with the rotation of the propeller shaft 136. The thrust bearing 340 is an example of the first thrust bearing.

The snap ring 342 is attached to the housing 350 so that it protrudes from the inner surface of the housing 350 toward the center side in the radial direction of the propeller shaft 136. The snap ring 342 is located behind the disk 322 and the plate 324 in the axial direction of the propeller shaft 136. At least one of the disk 322 and the plate 324 overlaps the snap ring 342 in the axial direction of the propeller shaft 136. The movable ranges of the disk 322 and the plate 324 in the axial direction of the propeller shaft 136 are limited by the snap ring 342.

The pusher 344 is arranged around the propeller shaft 136. The pusher 344 is movable in the axial direction of the propeller shaft 136. The pusher 344 includes a return hub 345 and a snap ring 346.

The return hub 345 is a member having a hole 345H formed in the center. The propeller shaft 136 is arranged in the hole 345H of the return hub 345. The retum hub 345 surrounds the outer circumference of the propeller shaft 136. The return hub 345 contacts the front end of the roller 318 in the axial direction of the propeller shaft 136. More specifically, the return hub 345 has a surface 345S that faces the rear side in the axial direction of the propeller shaft 136. The surface 345S of the return hub 345 is in contact with the roller 318. The return hub 345 is an example of the first part.

The snap ring 346 is attached to the return hub 345 so that it protrudes from the surface of the return hub 345 facing the outside in the radial direction of the propeller shaft 136 outwardly in the radial direction of the propeller shaft 136. The snap ring 346 contacts the rear end of the disk 322, which is the one of the disk 322 and the plate 324 located in the front side of the propeller shaft 136, in the axial direction of the propeller shaft 136. More specifically, the snap ring 346 is positioned behind the front-side disk 322 in the axial direction of the propeller shaft 136. The snap ring 346 has a surface 346S that faces the front side in the axial direction of the propeller shaft 136. The surface 346S of the snap ring 346 comes into contact with the disk 322 as the pusher 344 moves toward the front side in the axial direction of the propeller shaft 136. In addition, the outer circumferential surface of the snap ring 346 is located outside the inner circumferential surface of the disk 322 and inside the inner circumferential surface of the plate 324 in the radial direction of the propeller shaft 136. Therefore, the surface 346S of the snap ring 346 can come into contact with the disk 322 but not with the plate 324. The snap ring 346 is an example of the second part.

### OPERATION OF SILENCER 300

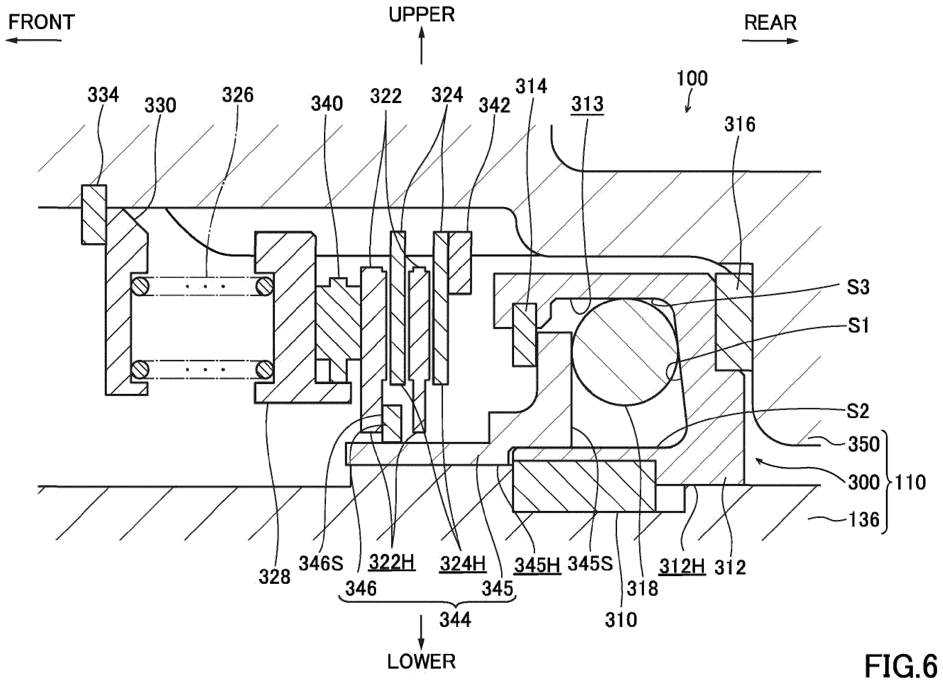

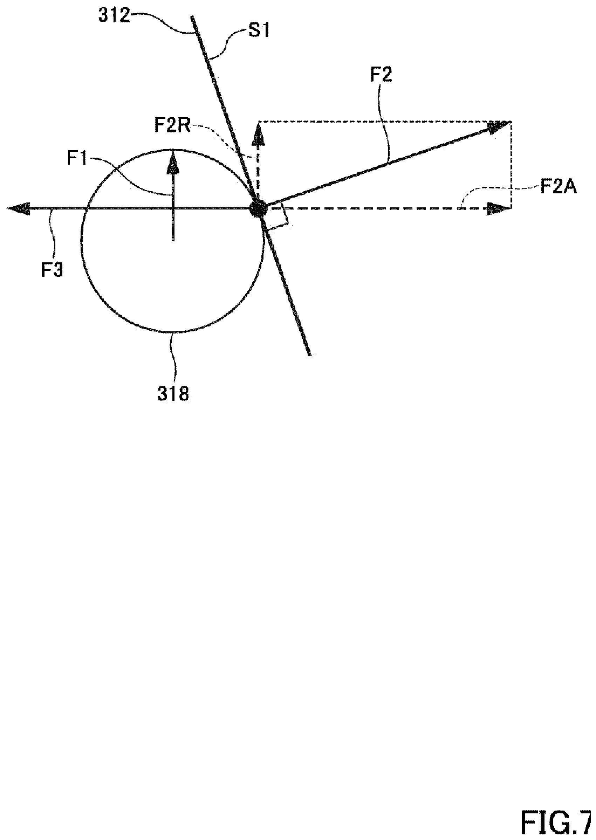

FIG. 6 is an explanatory view illustrating a detailed configuration of the area around the propeller shaft 136 in the status where the rotation speed of the engine body 122 is relatively high. FIG. 7 is an explanatory view conceptually illustrating the force applied to the roller 318. The operation of the silencer 300 will now be explained in detail with reference to FIGS. 5 to 7.

First, the operation of the silencer 300 when the rotation speed of the engine body 122 is relatively low will be explained with reference to FIG. 5. As mentioned above, the coil spring 326 exerts a force that causes the disk 322 and the plate 324 to come into contact with each other. Specifically, the coil spring 326 is a compression coil spring and is arranged in a compressed state between the spring seat 330 and the pressure plate 328. Therefore, the coil spring 326 produces an elastic force in the direction of extension in the axial direction of the propeller shaft 136. The pressure plate 328 receives the elastic force of the coil spring 326 to be pressed to the rear side in the axial direction of the propeller shaft 136. The thrust bearing 340 receives the elastic force of the coil spring 326 via the pressure plate 328 to be pressed to the rear side in the axial direction of the propeller shaft 136. The disk 322 and the plate 324 receive the elastic force of the coil spring 326 via the pressure plate 328 and thrust bearing 340 and are pressed to the rear side in the axial direction of the propeller shaft 136. In other words, the elastic force that the disk 322 and the plate 324 receive is a force in the rearward direction in the axial direction of the propeller shaft 136. As a result, the disk 322 and the plate 324 come into contact with each other.

As mentioned above, the disk 322 rotates around the propeller shaft 136 along with the rotation of the propeller shaft 136. On the other hand, the plate 324 is restricted in its rotation around the propeller shaft 136. Therefore, in the state where the disk 322 and the plate 324 are in contact with each other, when the disk 322 rotates around the propeller shaft 136 in accordance with the rotation of the propeller shaft 136, a frictional force is generated between the disk 322 and the plate 324. As a result, e.g., when the rotation speed of the engine body 122 is relatively low, when the engine body 122 is not rotating, or when the rotation of the engine body 122 is not being transmitted to the propeller shaft 136 (i.e., when in a neutral state), the rotation of the disk 322 around the propeller shaft 136 is restricted. In other words, the coil spring 326 applies friction to the propeller shaft 136, which rotates together with the disk 322, by pushing the disk 322 and the plate 324 toward the rear side in the axial direction of the propeller shaft 136.

The outboard motor 100 is likely to generate rattling noise when the rotation speed of the engine body 122 is relatively low. Specifically, e.g., when the rotation speed of the first gear 141 changes due to a change in the rotation speed of the engine body 122, the rotation speed of the second gear 142 and the third gear 143 cannot follow the rotation speed of the first gear 141, which causes the tooth surfaces to contact between the first gear 141 and the second gear 142 and between the first gear 141 and the third gear 143, causing a rattling noise. In the embodiment of the outboard motor 100, by applying friction to the propeller shaft 136 when the rotation speed of the engine body 122 is relatively low, the rotation speed of the second gear 142 and the third gear 143 becomes easier to follow the rotation speed of the first gear 141. This reduces the rattling noise that occurs between the first gear 141 and the second gear 142, and the rattling noise that occurs between the first gear 141 and the third gear 143.

Next, the action of the silencer 300 when the rotation speed of the engine body 122 is relatively high will be explained with reference to FIGS. 6 and 7. When the rotation speed of the engine body 122 is relatively high, the coil spring 326 also produces an elastic force in the direction of extension in the axial direction of the propeller shaft 136, in the same way as when the rotation speed of the engine body 122 is relatively low.

In addition, as described above, the roller housing 312 rotates around the propeller shaft 136 together with the key 310 along with the rotation of the propeller shaft 136. Therefore, the rollers 318 housed in the roller housing 312 are subjected to the centrifugal force F1 generated by the rotation of the propeller shaft 136 (see FIG. 7). As described above, the rollers 318 are movable in the radial direction of the propeller shaft 136. Therefore, the roller 318 receives the centrifugal force F1 generated by the rotating propeller shaft 136 and tries to move from the center side to the outer side in the radial direction of the propeller shaft 136 inside the housing space 313.

The roller 318 is in contact with the first surface S1 of the roller housing 312. In this status, when the roller 318 tries to move from the center side to the outer side in the radial direction of the propeller shaft 136, the roller housing 312 receives a force from the roller 318. Specifically, the first surface S1 of the roller housing 312 is not parallel to the radial direction of the propeller shaft 136, but is inclined so that it approaches the front side in the axial direction of the propeller shaft 136 from the center side toward the outer side in the radial direction of the propeller shaft 136. Therefore, when the roller 318 tries to move from the center side to the outer side in the radial direction of the propeller shaft 136, the roller housing 312 receives a force F2 in a direction perpendicular to the first surface S1 from the roller 318. At this time, roller 318 is also subjected to the reaction of force F2. Specifically, the force F2 can be decomposed into a force F2A in the axial direction of the propeller shaft 136 and a force F2R in the radial direction of the propeller shaft 136. As a reaction to the force F2A, the roller 318 receives a force F3, which is a force in the axial direction of the propeller shaft 136, from the roller housing 312. The force F3 is a forward force in the axial direction of the propeller shaft 136. In addition, the pusher 344 receives the force F3 via the roller 318 because the return hub 345 is in contact with the forward end of the roller 318 in the axial direction of the propeller shaft 136. The pusher 344, by receiving the force F3, tries to move in the forward direction in the axial direction of the propeller shaft 136.

When the pusher 344 tries to move in the axial direction of the propeller shaft 136, the snap ring 346 of the pusher 344 comes into contact with the rear end of the disk 322. Therefore, the disk 322 is subjected to the force F3 received via the pusher 344 and the elastic force of the coil spring 326. In other words, the disk 322 is subjected to a forward force in the axial direction of the propeller shaft 136 and a backward force in the axial direction of the propeller shaft 136. The force F3 that the disk 322 receives via the pusher 344 is the reaction force to the force F2 produced by the centrifugal force F1 associated with the rotation of the propeller shaft 136, so it increases as the speed of the propeller shaft 136 increases. Therefore, when the rotation speed of the propeller shaft 136 exceeds a certain value, the force F3 that the disk 322 receives via the pusher 344 exceeds the elastic force that the disk 322 receives from the coil spring 326. As a result, the disk 322, as the one of the disk 322 and the plate 324 located in the front side in the axial direction of the propeller shaft 136, is pushed by the snap ring 346 of the pusher 344, and the disk 322 and the plate 324 move away from each other against the elastic force of the coil spring 326. In other words, the pusher 344 reduces the friction force generated between the disk 322 and the plate 324 by pushing the disk 322 forward in the axial direction of the propeller shaft 136, thereby reducing the friction applied to the propeller shaft 136.

The outboard motor 100 is less likely to generate rattling noise when the rotation speed of the engine body 122 is relatively high. In the outboard motor 100 of this embodiment, when the rotation speed of the propeller shaft 136 exceeds a certain value, the friction applied to the propeller shaft 136 is reduced, thereby reducing the occurrence of rattling noise and reducing the friction applied to the propeller shaft 136 along with the increase in the rotation speed of the propeller shaft 136.

The rotation speed of the engine body 122 to cause the disk 322 and the plate 324 to move away from each other can be set to any value by adjusting the spring constant of the coil spring 326, the mass of the roller 318, or the like. In this embodiment, the disk 322 and the plate 324 are in contact with each other when the rotation speed of the engine body 122 is less than or equal to the trolling rotation speed, and they move away from each other when the rotation speed of the engine body 122 is greater than the trolling rotation speed.

### B. MODIFICATIONS:

The techniques disclosed herein are not limited to the above-described preferred embodiment and may be modified in various forms according to the following modifications.

The configuration of the boat 10 and the outboard motor 100 in the above-mentioned embodiment is just one example, and can be modified in various ways. For example, in the above embodiment, the boat propulsion device is exemplified by the outboard motor 100, the boat propulsion device may also be an inboard motor or a jet propeller.

In the above embodiment, the outboard motor 100 has only the engine body 122 as its drive source, but the boat propulsion device may also be a hybrid type that has a motor in addition to the engine.

In the above embodiment, the force F3 that the disk 322 receives via the pusher 344 is a force in the forward direction in the axial direction of the propeller shaft 136, and the elastic force that the disk 322 receives from the coil spring 326 is a force in the backward direction in the axial direction of the propeller shaft 136, but the directions are not limited to these. Specifically, the force that the rotating member receives via the pusher may be a force in the backward direction in the axial direction of the propeller shaft 136, and the elastic force that the rotating member receives from the elastic member may be a force in the forward direction in the axial direction of the propeller shaft 136. In the first place, the shaft of the boat propulsion device need not extend in the front-rear direction of the boat propulsion device.

In the above embodiment, the outboard motor 100 is provided with a coil spring 326 as an elastic member, but the boat propulsion device may be provided with an elastic member other than a coil spring.

In the above embodiment, the outboard motor 100 is provided with eight rollers 318, but the boat propulsion device only needs to be provided with at least one housed member.

In the above embodiment, the outboard motor 100 is provided with the rollers 318 as the housed member, but the boat propulsion device may be provided with a housed member other than the roller.

In the above embodiment, the outboard motor 100 is provided with a plurality of disks 322, but the boat propulsion device need only be provided with at least one rotating member. In the above embodiment, the outboard motor 100 is provided with a plurality of plates 324, but the boat propulsion device need only be provided with at least one non-rotating member.

In the above embodiment, the pusher 344 has the return hub 345 and the snap ring 346, but the configuration is not limited thereto; for example, the pusher may be a single integrated piece consisting of the first part and the second part.

In the above embodiment, the coil spring 326 pushes the disk 322 as the one of the disk 322 and the plate 324, but the elastic member may push the non-rotating member as the one of the rotating member and the non-rotating member.

In the above embodiment, oil is stored inside the housing 350, but the inside of the case may not be stored with oil.

In the above embodiment, the shaft is exemplified by the propeller shaft 136, but the shaft may be a shaft other than a propeller shaft.

## Claims

1. A boat propulsion device (100), comprising:
an engine (122) configured to generate a propulsion force;
a shaft (136) configured to rotate;
a transmission device (140) that is configured to transmit the propulsion force of the engine (122) to the shaft (136), comprising:
a drive gear (141) that is configured to rotate by the propulsion force of the engine (122); and
a driven gear (142, 143) that meshes with the drive gear (141);
a rotating member (322) arranged around the shaft (136) and movable in an axial direction of the shaft (136), the rotating member (322) is configured to rotate around the shaft (136) along with the rotation of the shaft (136);
**characterised in that** the transmission device (140) further comprises a non-rotating member (324) arranged around the shaft (136), adjacent to the rotating member (322) in the axial direction of the shaft (136), and movable in the axial direction of the shaft (136), the rotation of the non-rotating member (324) around the shaft (136) being restricted;
an elastic member (326) that is configured to push at least one of the rotating member (322) and the non-rotating member (324) to one side in the axial direction of the shaft (136) and configured to exert a force to cause the rotating member (322) and the non-rotating member (324) to come into contact with each other;
a housing (312) that surrounds the outer circumference of the shaft (136), comprising
a first surface (S1) that faces the other side of the axial direction and is inclined so that it approaches the other side in the axial direction of the shaft (136) from the center side toward the outer side in the radial direction of the shaft (136), wherein
the housing (312) is configured to rotate around the shaft (136) along with the rotation of the shaft (136);
a housed member (318) that contacts the first surface (S1) and is movable in the radial direction of the shaft (136); and
a pusher (344) that is movable in the axial direction of the shaft (136), comprising:
a first part (345) that contacts the end of the other side of the housed member (318) in the axial direction of the shaft (136); and
a second part (346) that contacts the end of the one side in the axial direction of the shaft (136) of one of the rotating member (322) and the non-rotating member (324) located on the other side in the axial direction of the shaft (136).

2. The boat propulsion device (100) according to claim 1, wherein the shaft is a propeller shaft (136).

3. The boat propulsion device (100) according to claim 2, wherein the housed member (318) is configured to move outwardly in the radial direction of the shaft (136) due to a centrifugal force generated by the rotation of the propeller shaft (136),
the pusher (344) is pushed to the other side in the axial direction of the shaft (136) by the housed member (318), and
the rotating member (322) and the non-rotating member (324) are configured to move away from each other by the second part (346) of the pusher (344) pushing one of the rotating member (322) and the non-rotating member (324) located on the other side in the axial direction of the shaft (136).

4. The boat propulsion device (100) according to claim 2 or 3, wherein the rotating member (322) and the non-rotating member (324) are configured to move away from each other when the rotation speed of the engine (122) is greater than the trolling rotation speed of the engine (122).

5. The boat propulsion device (100) according to any one of claims 2 to 4, wherein the propeller shaft (136) extends in a front-rear direction of the boat propulsion device (100),
the one side in the axial direction of the shaft (136) is the rear side of the boat propulsion device (100), and
the other side in the axial direction of the shaft (136) is the front side of the boat propulsion device (100).

6. The boat propulsion device (100) according to any one of claims 2 to 5, wherein the elastic member is a multi-row coil spring (326) in which multiple coil springs are arranged in the radial direction of the shaft (136).

7. The boat propulsion device (100) according to any one of claims 2 to 6, wherein the housed member is a roller (318) that is configured to roll in the radial direction of the shaft (136).

8. The boat propulsion device (100) according to any one of claims 2 to 7, further comprising:
a pressure plate (328), which is arranged around the propeller shaft (136) and located between the elastic member (326) and the rotating member (322)/the non-rotating member (324), in the axial direction of the shaft (136).

9. The boat propulsion device (100) according to claim 8, further comprising:
a first thrust bearing (340) arranged around the propeller shaft (136) and located between the pressure plate (328) and the rotating member (322)/the non-rotating member (324), in the axial direction of the shaft (136).

10. The boat propulsion device (100) according to any one of claims 2 to 9, wherein the first part of the pusher (344) is a return hub (345), and
the second part of the pusher (344) is a snap ring (346) attached to the return hub (345).

11. The boat propulsion device (100) according to any one of claims 2 to 10, wherein the elastic member (326) is configured to push the rotating member (322) to one side in the axial direction of the shaft (136) and is configured to exert a force to cause the rotating member (322) and the non-rotating member (324) to come into contact with each other.

12. The boat propulsion device (100) according to any one of claims 2 to 11, further comprising:
a case (350) that accommodates the rotating member (322), the non-rotating member (324), the elastic member (326), the housing (312), the housed member (318), and the pusher (344); and
a second thrust bearing (316), wherein the housing (312) is connected to the case (350) via the second thrust bearing (316).

13. The boat propulsion device (100) according to any one of claims 2 to 12, further comprising:
a drive shaft (132) that is configured to rotate by the propulsion force of the engine (122), wherein the drive gear (141) is configured to rotate together with the drive shaft (132), and
the transmission device (140) is movable between a connected position that connects with the driven gear (142, 143) and a disconnected position that moves away from the driven gear (142, 143), and has a dog clutch (145) that is configured to rotate together with the propeller shaft (136).

14. The boat propulsion device (100) according to any one of claims 2 to 13, further comprising:
a case (350) that accommodates the rotating member (322), the non-rotating member (324), the elastic member (326), the housing (312), the housed member (318), and the pusher (344), wherein
oil is stored inside the case (350).

15. A boat (10), comprising:
a boat body (200); and
a boat propulsion device (100) according to any one of claims 2 to 14 attached to the rear portion (210) of the boat body (200).

## Patentansprüche

1. Eine Bootsantriebsvorrichtung (100), die umfasst:
einen Motor (122), der so konfiguriert ist, um eine Antriebskraft zu erzeugen;
eine Welle (136), die so konfiguriert ist, dass sie sich dreht;
eine Getriebevorrichtung (140), die so konfiguriert ist, um die Antriebskraft des Motors (122) auf die Welle (136) zu übertragen, und die umfasst:
ein Antriebszahnrad (141), das so konfiguriert ist, dass es sich durch die Antriebskraft des Motors (122) dreht; und
ein angetriebenes Zahnrad (142, 143), das mit dem Antriebszahnrad (141) in Eingriff steht;
ein rotierendes Element (322), das um die Welle (136) herum angeordnet und in axialer Richtung der Welle (136) bewegbar ist, das rotierende Element (322) ist so konfiguriert, dass es sich zusammen mit der Drehung der Welle (136) um die Welle (136) dreht;
**dadurch gekennzeichnet, dass** die Getriebevorrichtung (140) ferner umfasst
ein nichtrotierende Element (324), das um die Welle (136) herum angeordnet ist, in axialer Richtung der Welle (136) an das rotierende Element (322) angrenzt und in axialer Richtung der Welle (136) bewegbar ist, wobei die Drehung des nichtrotierenden Elements (324) um die Welle (136) eingeschränkt ist;
ein elastisches Element (326), das so konfiguriert ist, um zumindest eines von dem rotierenden Element (322) und dem nichtrotierenden Element (324) in axialer Richtung der Welle (136) auf eine Seite zu drücken, und das so konfiguriert ist, um eine Kraft auszuüben, die bewirkt, dass das rotierende Element (322) und das nichtrotierende Element (324) miteinander in Kontakt kommen;
ein Gehäuse (312), das den Außenumfang der Welle (136) umgibt und umfasst
eine erste Oberfläche (S1), die der anderen Seite der axialen Richtung zugewandt ist und so geneigt ist, dass sie sich der anderen Seite in der axialen Richtung der Welle (136) von der Mittelseite aus in Richtung der Außenseite in der radialen Richtung der Welle (136) nähert, wobei
das Gehäuse (312) so konfiguriert ist, dass es sich zusammen mit der Drehung der Welle (136) um die Welle (136) dreht;
ein untergebrachtes Element (318), das mit der ersten Fläche (S1) in Kontakt steht und in radialer Richtung der Welle (136) bewegbar ist; und
einen Drücker (344), der in Axialrichtung der Welle (136) bewegbar ist und umfasst:
einen ersten Teil (345), der das Ende der anderen Seite des untergebrachten Elements (318) in Axialrichtung der Welle (136) berührt; und
einen zweiten Teil (346), der das Ende der einen Seite in axialer Richtung der Welle (136) von einem von dem rotierenden Element (322) und dem nichtrotierenden Element (324) berührt, das sich auf der anderen Seite in axialer Richtung der Welle (136) befindet.

2. Die Bootsantriebsvorrichtung (100) gemäß Anspruch 1, wobei die Welle eine Propellerwelle (136) ist.

3. Die Bootsantriebsvorrichtung (100) gemäß Anspruch 2, wobei das untergebrachte Element (318) so konfiguriert ist, dass es sich aufgrund einer durch die Drehung der Propellerwelle (136) erzeugten Zentrifugalkraft in radialer Richtung der Welle (136) nach außen bewegt,
der Drücker (344) durch das untergebrachte Element (318) in axialer Richtung der Welle (136) auf die andere Seite gedrückt wird, und
das rotierende Element (322) und das nichtrrotierende Element (324) so konfiguriert sind, dass sie sich voneinander wegbewegen, indem das zweite Teil (346) des Drückers (344) eines von dem rotierenden Element (322) und dem nichtrrotierenden Element (324), das sich auf der anderen Seite in axialer Richtung der Welle (136) befindet, drückt.

4. Die Bootsantriebsvorrichtung (100) gemäß Anspruch 2 oder 3, wobei das rotierende Element (322) und das nichtrrotierende Element (324) so konfiguriert sind, dass sie sich voneinander wegbewegen, wenn die Drehzahl des Motors (122) größer ist als die Trolling-Drehzahl des Motors (122).

5. Die Bootsantriebsvorrichtung (100) gemäß irgendeinem der Ansprüche 2 bis 4, wobei sich die Propellerwelle (136) in einer Längsrichtung der Bootsantriebsvorrichtung (100) erstreckt,
die eine Seite in axialer Richtung der Welle (136) die Rückseite der Bootsantriebsvorrichtung (100) ist und
die andere Seite in axialer Richtung der Welle (136) die Vorderseite der Bootsantriebsvorrichtung (100) ist.

6. Die Bootsantriebsvorrichtung (100) gemäß irgendeinem der Ansprüche 2 bis 5, wobei das elastische Element eine mehrreihige Schraubenfeder (326) ist, bei der mehrere Schraubenfedern in radialer Richtung der Welle (136) angeordnet sind.

7. Die Bootsantriebsvorrichtung (100) gemäß irgendeinem der Ansprüche 2 bis 6, wobei das untergebrachte Element eine Rolle (318) ist, die so konfiguriert ist, dass sie in radialer Richtung der Welle (136) rollt.

8. Die Bootsantriebsvorrichtung (100) gemäß irgendeinem der Ansprüche 2 bis 7, die ferner umfasst:
eine Druckplatte (328), die um die Propellerwelle (136) herum angeordnet ist und sich in axialer Richtung der Welle (136) zwischen dem elastischen Element (326) und dem rotierenden Element (322)/dem nichtrrotierenden Element (324) befindet.

9. Die Bootsantriebsvorrichtung (100) gemäß Anspruch 8, die ferner umfasst:
ein erstes Axiallager (340), das um die Propellerwelle (136) herum angeordnet ist und sich in axialer Richtung der Welle (136) zwischen der Druckplatte (328) und dem rotierenden Element (322)/dem nichtrrotierenden Element (324) befindet.

10. Die Bootsantriebsvorrichtung (100) gemäß irgendeinem der Ansprüche 2 bis 9, wobei der erste Teil des Drückers (344) eine Rücklaufnabe (345) ist und
der zweite Teil des Drückers (344) ein Sprengring (346) ist, der an der Rücklaufnabe (345) befestigt ist.

11. Die Bootsantriebsvorrichtung (100) gemäß irgendeinem der Ansprüche 2 bis 10, wobei das elastische Element (326) so konfiguriert ist, dass es das rotierende Element (322) in axialer Richtung der Welle (136) zu der einen Seite drückt, und so konfiguriert ist, dass es eine Kraft ausübt, um zu bewirken, dass das rotierende Element (322) und das nichtrrotierende Element (324) in Kontakt miteinander kommen.

12. Die Bootsantriebsvorrichtung (100) gemäß irgendeinem der Ansprüche 2 bis 11, die ferner umfasst:
ein Gehäuseelement (350), welches das rotierende Element (322), das nichtrrotierende Element (324), das elastische Element (326), das Gehäuse (312), das untergebrachte Element (318) und den Drücker (344) aufnimmt; und
ein zweites Axiallager (316), wobei das Gehäuse (312) über das zweite Axiallager (316) mit dem Gehäuseelement (350) verbunden ist.

13. Die Bootsantriebsvorrichtung (100) gemäß irgendeinem der Ansprüche 2 bis 12, die ferner umfasst:
eine Antriebswelle (132), die so konfiguriert ist, dass sie sich durch die Antriebskraft des Motors (122) dreht, wobei das Antriebszahnrad (141) so konfiguriert ist, dass es sich zusammen mit der Antriebswelle (132) dreht, und
die Getriebevorrichtung (140) zwischen einer verbundenen Position, in der sie mit dem angetriebenen Zahnrad (142, 143) verbunden ist, und einer getrennten Position, in der sie sich vom angetriebenen Zahnrad (142, 143) entfernt, bewegbar ist und eine Klauenkupplung (145) aufweist, die so ausgelegt ist, dass sie sich gemeinsam mit der Propellerwelle (136) dreht.

14. Die Bootsantriebsvorrichtung (100) gemäß irgendeinem der Ansprüche 2 bis 13, die ferner umfasst:
ein Gehäuseelement (350), das das rotierende Element (322), das nichtrrotierende Element (324), das elastische Element (326), das Gehäuse (312), das untergebrachte Element (318) und den Drücker (344) aufnimmt, wobei
Öl im Inneren des Gehäuses (350) gespeichert ist.

15. Ein Boot (10), das umfasst:
einen Bootsrumpf (200); und
eine Bootsantriebsvorrichtung (100) gemäß irgendeinem der Ansprüche 2 bis 14, die am hinteren Abschnitt (210) des Bootsrumpfs (200) angebracht ist.

## Revendications

1. Dispositif de propulsion pour bateau (100), comprenant :
un moteur (122) configuré pour générer une force de propulsion ;
un arbre (136) configuré pour tourner ;
un dispositif de transmission (140) configuré pour transmettre la force de propulsion du moteur (122) à l'arbre (136), comprenant :
un engrenage d'entraînement (141) configuré pour tourner sous l'effet de la force de propulsion du moteur (122) ; et
un engrenage entraîné (142, 143) qui s'engrène avec l'engrenage d'entraînement (141) ;
un élément rotatif (322) agencé autour de l'arbre (136) et mobile dans la direction axiale de l'arbre (136), l'élément rotatif (322) est configuré pour tourner autour de l'arbre (136) en même temps que la rotation de l'arbre (136) ;
**caractérisé en ce que** le dispositif de transmission (140) comprend en outre un élément non rotatif (324) disposé autour de l'arbre (136), adjacent à l'élément rotatif (322) dans la direction axiale de l'arbre (136), et mobile dans la direction axiale de l'arbre (136), la rotation de l'élément non rotatif (324) autour de l'arbre (136) étant limitée ;
un élément élastique (326) qui est configuré pour pousser au moins l'un parmi l'élément rotatif (322) et de l'élément non rotatif (324) vers un côté dans la direction axiale de l'arbre (136) et conçu pour exercer une force afin d'amener l'élément rotatif (322) et l'élément non rotatif (324) à entrer en contact l'un avec l'autre ;
un boîtier (312) qui entoure la circonférence extérieure de l'arbre (136), comprenant une première surface (S1) qui fait face à l'autre côté de la direction axiale et qui est inclinée de manière à se rapprocher de l'autre côté dans la direction axiale de l'arbre (136), du côté central vers le côté extérieur dans la direction radiale de l'arbre (136), dans lequel
le boîtier (312) est agencé pour tourner autour de l'arbre (136) en même temps que la rotation de l'arbre (136) ;
un élément logé (318) qui est en contact avec la première surface (S1) et qui est mobile dans la direction radiale de l'arbre (136) ; et
un poussoir (344) qui est mobile dans la direction axiale de l'arbre (136), comprenant :
une première partie (345) qui est en contact avec l'extrémité de l'autre côté de l'élément logé (318) dans la direction axiale de l'arbre (136) ; et
une deuxième partie (346) qui est en contact avec l'extrémité de l'un des côtés, dans la direction axiale de l'arbre (136), de l'un parmi l'élément rotatif (322) et l'élément non rotatif (324) situé de l'autre côté, dans la direction axiale de l'arbre (136).

2. Dispositif de propulsion pour bateau (100) selon la revendication 1, dans lequel l'arbre est un arbre d'hélice (136).

3. Dispositif de propulsion pour bateau (100) selon la revendication 2, dans lequel l'élément logé (318) est configuré pour se déplacer vers l'extérieur dans la direction radiale de l'arbre (136) sous l'effet d'une force centrifuge générée par la rotation de l'arbre d'hélice (136),
le poussoir (344) est poussé vers l'autre côté dans la direction axiale de l'arbre (136) par l'élément logé (318), et
l'élément rotatif (322) et l'élément non rotatif (324) sont configurés pour s'éloigner l'un de l'autre par la deuxième partie (346) du poussoir (344) poussant l'un parmi l'élément rotatif (322) et l'élément non rotatif (324) situé de l'autre côté dans la direction axiale de l'arbre (136).

4. Dispositif de propulsion pour bateau (100) selon la revendication 2 ou 3, dans lequel l'élément rotatif (322) et l'élément non rotatif (324) sont configurés pour s'éloigner l'un de l'autre lorsque la vitesse de rotation du moteur (122) est supérieure à la vitesse de rotation de traîne du moteur (122).

5. Dispositif de propulsion pour bateau (100) selon l'une quelconque des revendications 2 à 4, dans lequel l'arbre d'hélice (136) s'étend dans une direction avant-arrière du dispositif de propulsion pour bateau (100),
un côté, dans la direction axiale de l'arbre (136), constitue l'arrière du dispositif de propulsion pour bateau (100), et
l'autre côté, dans la direction axiale de l'arbre (136), constitue l'avant du dispositif de propulsion pour bateau (100).

6. Dispositif de propulsion pour bateau (100) selon l'une quelconque des revendications 2 à 5, dans lequel l'élément élastique (326) est un ressort hélicoïdal à plusieurs rangées dans lequel plusieurs ressorts hélicoïdaux sont disposés dans la direction radiale de l'arbre (136).

7. Dispositif de propulsion pour bateau (100) selon l'une quelconque des revendications 2 à 6, dans lequel l'élément logé (318) est un rouleau qui est configuré pour rouler dans la direction radiale de l'arbre (136).

8. Dispositif de propulsion pour bateau (100) selon l'une quelconque des revendications 2 à 7, comprenant en outre :
une plaque de pression (328), qui est agencée autour de l'arbre d'hélice (136) et située entre l'élément élastique (326) et l'élément rotatif (322)/l'élément non rotatif (324), dans la direction axiale de l'arbre (136).

9. Dispositif de propulsion pour bateau (100) selon la revendication 8, comprenant en outre :
un premier palier de butée (340) avec un agencement autour de l'arbre d'hélice (136) et situé entre la plaque de pression (328) et l'élément rotatif (322)/l'élément non rotatif (324), dans la direction axiale de l'arbre (136).

10. Dispositif de propulsion pour bateau (100) selon l'une quelconque des revendications 2 à 9, dans lequel la première partie du poussoir (344) est un moyeu de retour (345), et
la deuxième partie (346) du poussoir (344) est un anneau élastique fixé au moyeu de retour (345).

11. Dispositif de propulsion pour bateau (100) selon l'une quelconque des revendications 2 à 10, dans lequel l'élément élastique (326) est configuré pour pousser l'élément rotatif (322) d'un côté dans la direction axiale de l'arbre (136) et est configuré pour exercer une force afin d'amener l'élément rotatif (322) et l'élément non rotatif (324) à entrer en contact l'un avec l'autre.

12. Dispositif de propulsion pour bateau (100) selon l'une quelconque des revendications 2 à 11, comprenant en outre :
un carter (350) qui accommode l'élément rotatif (322), l'élément non rotatif (324), l'élément élastique (326), le boîtier (312), l'élément logé (318) et le poussoir (344) ; et
un deuxième palier de butée (316), dans lequel le boîtier (312) est connecté au carter (350) par l'intermédiaire du deuxième palier de butée (316).

13. Dispositif de propulsion pour bateau (100) selon l'une quelconque des revendications 2 à 12, comprenant en outre :
un arbre d'entraînement (132) configuré pour tourner sous l'effet de la force de propulsion du moteur (122), dans lequel l'engrenage d'entraînement (141) est configuré pour tourner conjointement avec l'arbre d'entraînement (132), et
le dispositif de transmission (140) est mobile entre une position connectée qui le relie à l'engrenage entraîné (142, 143) et une position de désengagement qui l'éloigne de l'engrenage entraîné (142, 143), et comporte un embrayage à cliquet (145) qui est configuré pour tourner conjointement avec l'arbre d'hélice (136).

14. Dispositif de propulsion pour bateau (100) selon l'une quelconque des revendications 2 à 13, comprenant en outre :
un carter (350) qui loge l'élément rotatif (322), l'élément non rotatif (324), l'élément élastique (326), le boîtier (312), l'élément logé (318) et le poussoir (344), dans lequel
de l'huile est stockée à l'intérieur du carter (350).

15. Bateau (10), comprenant :
une coque (200) ; et
un dispositif de propulsion pour bateau (100) selon l'une quelconque des revendications 2 à 14, fixé à la partie arrière (210) de la coque (200).
